# EUROPÄISCHE PATENTSCHRIFT

(11) **EP 4 021 788 B1**
(45) Veröffentlichungstag und Bekanntmachung des Hinweises auf die Patenterteilung: **02.08.2023**
(21) Anmeldenummer: 20757899.8
(22) Anmeldetag: 18.08.2020
(51) Int. Cl.: B62K 5/02, B62K 5/10, B62K 7/04, B62K 25/10, B62K 25/20, B62K 5/00

(54) **FAHRZEUG MIT NEIGEMECHANISMUS**
VEHICLE HAVING AN INCLINING MECHANISM
VÉHICULE AYANT UN MÉCANISME D'INCLINAISON

(30) Priorität: 28.08.2019 AT 507422019
(43) Veröffentlichungstag der Anmeldung: 06.07.2022
(73) Patentinhaber: Gleam Technologies GmbH, 1220 Wien (AT)
(72) Erfinder: EIBL, Mario, 1040 Wien (AT)
(86) Internationale Anmeldenummer: PCT/EP2020/073107
(87) Internationale Veröffentlichungsnummer: WO 2021/037608

(56) Entgegenhaltungen:
- EP-A1- 0 876 263
- JP-A- S5 529 604
- US-A- 4 360 224

## Beschreibung

Die Erfindung bezieht sich auf ein Fahrzeug mit einem Rahmen, einem ersten Hinterrad, einem zweiten Hinterrad sowie einem am Rahmen drehbar gelagerten Vorderrad, wobei ein Neigemechanismus zur veränderbaren Neigung der Raddrehachsen des ersten Hinterrades und des zweiten Hinterrades zu einer Ebene, die durch die Radaufstandspunkte der Räder aufgespannt wird, vorgesehen ist, der eine erste, am Rahmen angelenkte Schwinge, an der das erste Hinterrad drehbar befestigt ist und mit der die Höhenlage der Raddrehachse des ersten Hinterrades veränderbar ist, sowie eine zweite, am Rahmen angelenkte Schwinge, an der das zweite Hinterrad drehbar befestigt ist und mit der die Höhenlage der Raddrehachse des zweiten Hinterrades veränderbar ist, umfasst, gemäß dem Oberbegriff von Anspruch 1. Dokument EP0876263A1 zeigt den Oberbegriff des Anspruchs 1.

Fahrzeuge, insbesondere Fahrräder, mit einem Neigemechanismus der genannten Art wurden in der WO 2014/ 060238 beschrieben. Dabei wird eine veränderbare Neigung der Raddrehachsen des ersten Hinterrades und des zweiten Hinterrades zu einer Ebene, die durch die Radaufstandspunkte der Räder aufgespannt wird, erreicht, indem mittels Lagerung der Hinterräder an beweglichen Schwingen die Höhenlage der Raddrehachsen der Hinterräder relativ zum Rahmen veränderbar ist. Bei einer durch die Radaufstandspunkte der Räder aufgespannten Horizontalebene ergibt sich dadurch eine Neigung der Raddrehachsen der Hinterräder relativ zu einer Vertikalen, die eine Neigung des gesamten Fahrzeuges relativ zu einer Vertikalen zulässt. Diese Neigung verbessert das Fahrverhalten des Fahrzeuges insbesondere bei Kurvenfahrten entscheidend.

Bei solchen Fahrzeugen handelt es sich etwa um dreirädrige Transportfahrzeuge mit einer Ladefläche für Ladegut mit oder ohne Motorunterstützung. Vor allem in urbanen Ballungszentren können Transportfahrzeuge dieser Art den Anforderungen an eine hochflexible Mobilität gerecht werden. Da Güter und Personen auf schnelle, ökologische und sichere Weise transportiert werden können, eignet sich ein solches Fahrzeug insbesondere für Kurier-, Express- und Paketdienste und erlaubt den Einsatz auch dort, wo enge, kurvige und/oder stark befahrene Straßen zum täglichen Alltagsbild gehören.

Bei dem in der WO 2014/ 060238 beschriebenen Neigemechanismus sind die beiden Hinterradschwingen durch einen mechanischen Kopplungsmechanismus derart gekoppelt, dass eine Drehung der einen Schwinge eine gegensinnige Drehung der anderen Schwinge bewirkt. Dadurch sind die zueinander verstellbaren Hinterräder in jeder Neigeposition miteinander synchronisiert. Der mechanische Kopplungsmechanismus umfasst dabei einen Querschwinger, der am Rahmen um eine Schwenkachse schwenkbar gelagert ist und beidseits der Schwenkachse einen Arm aufweist, wobei ein Arm an der ersten Schwinge angekoppelt ist, und der andere Arm an der zweiten Schwinge angekoppelt ist.

Diese Ausführung stellt zwar eine besonders einfache und zuverlässige Konstruktion dar, die eine optimale und reibungslose Anpassung der Räder auf die Neigung des Rahmens erlaubt, zeigt aber in der Praxis Nachteile im Fahrverhalten. Zum einen gelingt nur eine unzureichende Abfederung und Dämpfung von Fahrbahnunebenheiten, und zum anderen bewirkt die gegensinnige, aber ansonsten synchrone Neigung der beiden Hinterräder ein suboptimales Fahrverhalten bei Kurvenfahrten, insbesondere bei langsamen Kurvenfahrten oder sonstigen lateralen Fahrmanövern, beim Umkehren oder beim Parken.

Es ist daher das Ziel der Erfindung ein Fahrzeug, insbesondere ein dreirädriges Fahrrad, mit einem Neigemechanismus für die beiden Hinterräder so zu verbessern, dass das Fahrverhalten bei Kurvenfahrten oder unebenem Terrain verbessert wird.

Dieses Ziel wird durch die Merkmale von Anspruch 1 erreicht. Anspruch 1 bezieht sich auf ein Fahrzeug mit einem Rahmen, einem ersten Hinterrad, einem zweiten Hinterrad sowie einem am Rahmen drehbar gelagerten Vorderrad, wobei ein Neigemechanismus zur veränderbaren Neigung der Raddrehachsen des ersten Hinterrades und des zweiten Hinterrades zu einer Ebene, die durch die Radaufstandspunkte der Räder aufgespannt wird, vorgesehen ist, der eine erste, am Rahmen angelenkte Schwinge, an der das erste Hinterrad drehbar befestigt ist und mit der die Höhenlage der Raddrehachse des ersten Hinterrades veränderbar ist, sowie eine zweite, am Rahmen angelenkte Schwinge, an der das zweite Hinterrad drehbar befestigt ist und mit der die Höhenlage der Raddrehachse des zweiten Hinterrades veränderbar ist, umfasst. Erfindungsgemäß wird hierbei vorgeschlagen, dass die erste Schwinge mit der zweiten Schwinge über eine Drehstabfederung verbunden ist, die zwei parallel zueinander angeordnete Drehstäbe umfasst, deren erste Enden an einer Drehhülse befestigt sind, die am Rahmen mit einer zwischen den Drehstäben verlaufenden und zu den Drehstäben parallelen Drehhülsenachse drehbar gelagert ist, und deren zweite Enden über einen Drehstabverbinder miteinander verbunden sind, wobei an einem ersten Drehstab ein erster Schwingarm drehfest befestigt ist, der über erste Aufhängungselemente mit der ersten Schwinge verbunden ist, und an einem zweiten Drehstab ein zweiter Schwingarm drehfest befestigt ist, der über zweite Aufhängungselemente mit der zweiten Schwinge verbunden ist. Unter einer drehfesten Befestigung wird hierbei verstanden, dass über eine solche drehfeste Befestigung Drehmomente übertragen werden können. Auf die Raddrehachsen der Hinterräder wirkende Kräfte, die geeignet sind eine Veränderung der jeweiligen Höhenlage zu bewirken, werden somit zunächst über die Aufhängungselemente auf den jeweiligen Schwingarm der Drehstabfederung übertragen, wo sie aufgrund der drehfesten Befestigung am jeweiligen Drehstab ein Drehmoment auf den Drehstab um seine jeweilige Drehstabachse ausüben. Die Drehstäbe sind aber jeweils an ihren ersten Enden an einer Drehhülse mit einer zwischen den Drehstäben verlaufenden und zu den Drehstäben parallelen Drehhülsenachse befestigt und an ihren zweiten Enden über einen Drehstabverbinder miteinander verbunden. Das von einem Schwingarm auf den drehfest mit ihm verbundenen Drehstab ausgeübte Drehmoment bewirkt somit eine Torsion des betreffenden Drehstabes um seine Drehstabachse, die vom Drehstabverbinder in ein Drehmoment um die Drehhülsenachse umgewandelt wird, das den zweiten Drehstab und somit den zweiten Schwingarm in eine relativ zum ersten Schwingarm gegensinnige Richtung auslenkt. Auf diese Weise wird mithilfe des erfindungsgemäßen Neigemechanismus zwar eine gegensinnige Auslenkung der beiden Schwingarme sichergestellt, mithilfe der Drehstabfederung aber einerseits eine Federung gewollter oder ungewollter Auslenkbewegungen bewirkt, sowie andererseits eine das Fahrverhalten begünstigende Entkopplung der Neigebewegungen der beiden Hinterräder.

Zudem wäre es auch möglich den erfindungsgemäßen Neigemechanismus für dreirädrige Fahrzeuge zu verwenden, bei denen zwei Vorderräder und ein Hinterrad vorgesehen sind, wobei der erfindungsgemäße Neigemechanismus an den beiden Vorderrädern angeordnet ist. Auch eine solche Ausführung soll anspruchsgemäß umfasst sein.

Die Hinterräder sind an den beiden Schwingen angeordnet, die einerseits am Rahmen angelenkt sind, und andererseits im Bereich ihrer jeweils freien Enden das jeweilige Hinterrad tragen. Es wird hierfür vorzugsweise vorgeschlagen, dass die Drehstabfederung zwischen dem Vorderrad und den Hinterrädern angeordnet ist. Vorzugsweise ist dabei die Drehstabfederung mit einer in Richtung der Hinterräder aufwärts geneigten Drehhülsenachse angeordnet. Auf diese Weise wird eine Verlängerung der Schwingen und somit eine Vergrößerung des Abstandes der Hinterräder vom Rahmen des Fahrzeugs ermöglicht, um auf diese Weise ausreichend Platz für eine Ladefläche oder dergleichen zu schaffen. Das Fahrzeug kann somit insbesondere als dreirädriges Fahrzeug ausgeführt sein, und eine im Bereich zwischen dem ersten Hinterrad und dem zweiten Hinterrad angeordnete Ladefläche aufweisen.

Um einfache kinematische Verhältnisse zu schaffen wird des Weiteren vorgeschlagen, dass die erste Schwinge und die zweite Schwinge um eine gemeinsame, horizontale Schwingenachse am Rahmen schwenkbar gelagert sind. Ferner wird vorgeschlagen, dass die ersten Aufhängungselemente und die zweiten Aufhängungselemente jeweils aus starren Verbindungsstäben gebildet werden. Zusätzliche Federelemente oder dergleichen sind somit nicht mehr erforderlich.

Des Weiteren wir vorzugsweise vorgeschlagen, dass die Drehstabfederung mit einer die Drehbewegung der Drehhülse relativ zum Rahmen wahlweise blockierenden Arretiereinrichtung versehen ist. Bei blockierter Drehhülse wird aber auch eine Schwenkbewegung der Schwingarme unterbunden, sodass die Höhenlage der Raddrehachsen der Hinterräder nicht mehr verstellbar ist und sich somit auch keine Neigung der Hinterräder mehr einstellen kann. Mithilfe der Arretiereinrichtung kann der Fahrer somit zwischen einem Fahrmodus mit neigbaren Hinterrädern und einem Fahrmodus mit nicht-neigbaren Hinterrädern wählen.

Hinsichtlich einer möglichen Ausführung einer solchen Arretiereinrichtung wird etwa vorgeschlagen, dass sie zwei am Rahmen schwenkbar angeordnete, zweiarmige Arretierhebel umfasst, die in einer blockierenden Stellung jeweils mit einem an einem ersten Hebelarm angeordneten Arretiervorsprung in eine ihnen jeweils zugeordnete und an der Drehhülse angeordnete Arretieraufnahme eingreifen, und die beiden Arretierhebel an ihren jeweils zweiten Hebelarmen über eine Arretierfeder miteinander verbunden und in ihrer blockierenden Stellung gehalten sind, wobei ein Betätigungshebel vorgesehen ist, mit dem die beiden Arretierhebel entgegen der rückstellenden Kraft der Arretierfeder in eine freigebende Stellung bewegbar sind, in der die Arretiervorsprünge außerhalb der Arretieraufnahmen liegen.

Für den Betätigungshebel wird vorgeschlagen, dass zwischen den jeweils zweiten Hebelarmen der Arretierhebel ein Exzenter mit einer Exzenternase angeordnet ist, der mittels des Betätigungshebels zwischen einer ersten Stellung, in der sich die beiden Arretierhebel in ihrer blockierenden Stellung befinden, in eine zweite Stellung, in der die beiden Arretierhebel mittels der Exzenternase in ihrer freigebenden Stellung gehalten sind, rotierbar ist. Der Betätigungshebel selber kann vom Fahrer auch während der Fahrt beispielsweise mittels eines Drahtseilzuges betätigt werden, um zwischen dem Fahrmodus mit neigbaren Hinterrädern und dem Fahrmodus mit nicht-neigbaren Hinterrädern zu wechseln.

Hinsichtlich des Drehstabverbinders wird vorgeschlagen, dass er zwei einarmige Biegehebel umfasst, die jeweils drehfest mit einem der Drehstäbe verbunden sind, und an ihren den Drehstäben abgewandten Hebelenden über ein die Biegevorspannung der Drehstäbe verstellendes Verstellelement miteinander verbunden sind. Auf diese Weise kann nicht nur das Drehmoment wie oben beschrieben übertragen werden, sondern auch die Steifigkeit der Drehstabfederung eingestellt werden, indem mittels des Verstellelements die Biegevorspannung der Drehstäbe verstellt wird. Unter der Steifigkeit der Drehstabfederung wird dabei verstanden, mit welcher Auslenkung die Schwingarme auf Belastungen, die die Höhenlage der Raddrehachsen der Hinterräder verändern, reagieren. Je steifer die Drehstabfederung eingestellt ist, desto geringer sind diese Auslenkungen. Das Verstellelement kann beispielsweise als eine auf einer Gewindestange mit gegensinnigen Gewinden gehaltenen Verstellmutter ausgeführt werden, mit der die den Drehstäben abgewandten Hebelenden voneinander weg oder aufeinander zu bewegt werden können. Diese Verstellbewegung bewirkt jeweils ein Drehmoment um die Drehstabachse, die mit der Hebelachse des ihm jeweils zugeordneten Biegehebels zusammenfällt, das ein Biegemoment auf den jeweiligen Drehstab ausübt.

Die Erfindung wird in weiterer Folge anhand von Ausführungsbeispielen mithilfe der beiliegenden Figuren näher erläutert. Es zeigen hierbei die
Fig. 1 eine Ausführungsform eines erfindungsgemäßes Fahrzeuges von unten gesehen,
Fig. 2 die Ausführungsform eines erfindungsgemäßes Fahrzeuges gemäß Fig. 1 von hinten gesehen,
Fig. 3 die Ausführungsform eines erfindungsgemäßes Fahrzeuges gemäß Fig. 1 von der Seite gesehen,
Fig. 4 eine Darstellung des Rahmens und der daran angeordneten Drehstabfederung mit der Drehhülsenachse,
Fig. 5 die Darstellung der Fig. 4 von oben gesehen mit der Drehhülsenachse und der Schwingenachse,
Fig. 6 eine perspektivische Darstellung der wesentlichen Komponenten der Drehstabfederung,
Fig. 7 die Drehstabfederung gemäß der Fig. 6 von unten gesehen,
Fig. 8 die Drehstabfederung gemäß der Fig. 6 mit Blick auf die Drehhülse,
Fig. 9 die Drehstabfederung gemäß der Fig. 6 mit Blick auf den Drehstabverbinder,
Fig. 10 die Drehstabfederung gemäß der Fig. 6 von oben gesehen,
Fig. 11 eine Darstellung einer Ausführungsform einer Arretiereinrichtung, und die
Fig. 12 die Arretiereinrichtung gemäß Fig. 11 in perspektivischer Darstellung.

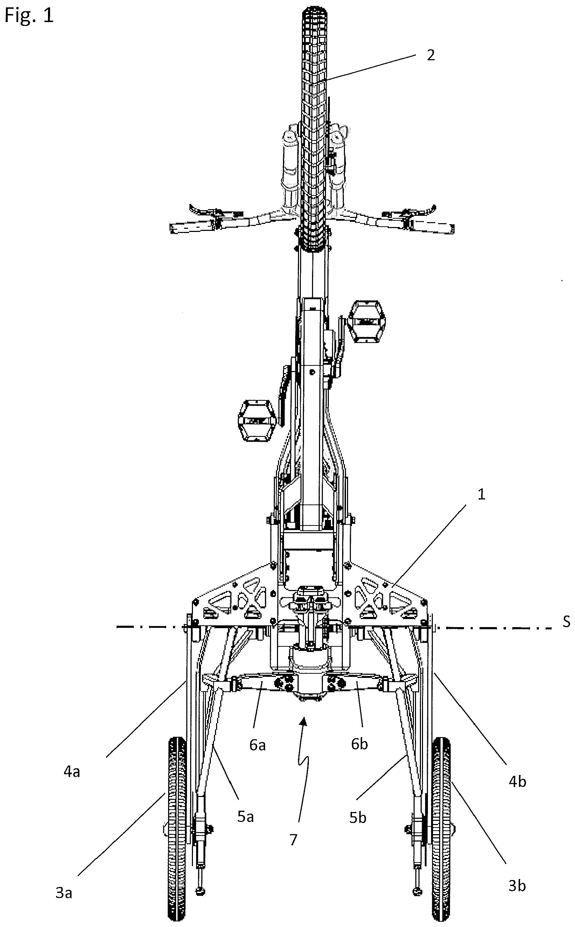

Zunächst wird auf die Fig. 1 bis 5 Bezug genommen, die ein erfindungsgemäßes Fahrzeug mit einem Rahmen 1, einem Vorderrad 2 und zwei Hinterräder 3a, 3b zeigen. Ein Lenker ist in bekannter Weise zur Steuerung des Vorderrades 2 vorgesehen, sowie Pedale, die die Hinterräder 3a, 3b in herkömmlicher Weise über einen Kettenantrieb und vorzugsweise über entsprechende Getriebeelemente antreiben. Die Radaufstandspunkte des Vorderades 2 und der beiden Hinterräder 3a, 3b spannen eine Ebene auf, wobei die Radaufstandspunkte die untersten Punkte der Räder darstellen, die in Kontakt mit der Fahrbahn stehen. Der in weiterer Folge erläuterte Neigemechanismus lässt nun eine Veränderung der Neigung der Raddrehachsen des ersten Hinterrades 3a und des zweiten Hinterrades 3b zu dieser Ebene zu, nämlich eine von der Vertikalen auf diese Ebene abweichende Neigung. Der Neigemechanismus erlaubt somit bei Kurvenfahrt eine Neigung der Hinterräder 3a, 3b zur Fahrebene, ohne dass diese den Bodenkontakt verlieren.

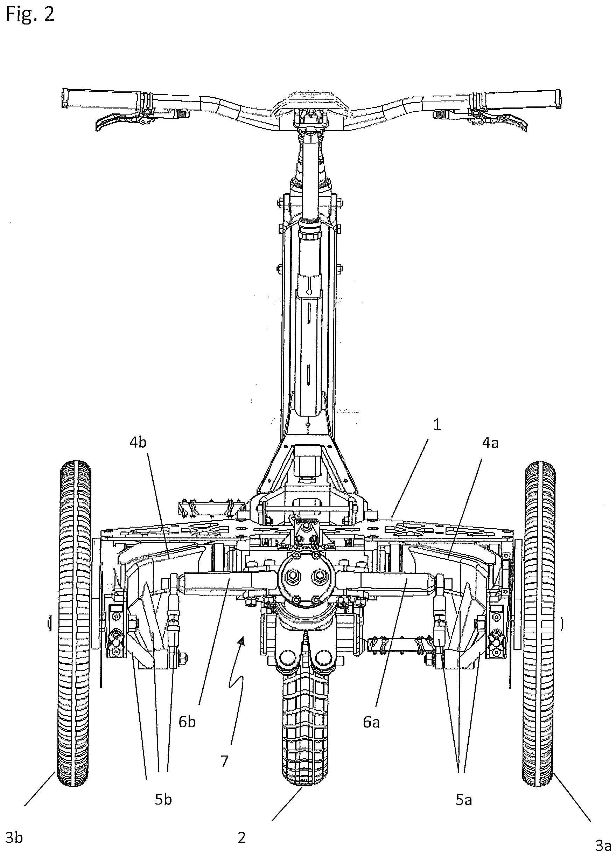

Ein erstes Hinterrad 3a ist hierfür an einer ersten Schwinge 4a drehbar angeordnet, die am Rahmen 1 angelenkt ist, und ein zweites Hinterrad 3b ist an einer zweiten Schwinge 4b drehbar angeordnet, die ebenfalls am Rahmen 1 angelenkt ist. Im gezeigten Ausführungsbeispiel sind die beiden Schwingen 4a, 4b um eine gemeinsame, horizontale Schwingenachse S drehbar am Rahmen 1 angelenkt (siehe Fig. 1). Die Bewegung der ersten Schwinge 4a um ihre Schwingenachse S wird durch erste Aufhängungselemente 5a gehemmt, die die erste Schwinge 4a mit einem ersten Schwingarm 6a einer Drehstabfederung 7 verbinden. In analoger Weise wird die Bewegung der zweiten Schwinge 4b um ihre Schwingenachse S durch zweite Aufhängungselemente 5b gehemmt, die die zweite Schwinge 4b mit einem zweiten Schwingarm 6b der Drehstabfederung 7 verbinden. Im gezeigten Ausführungsbeispiel werden die ersten Aufhängungselemente 5a und die zweiten Aufhängungselemente 5b jeweils aus starren Verbindungsstäben gebildet (siehe insbesondere Fig. 2).

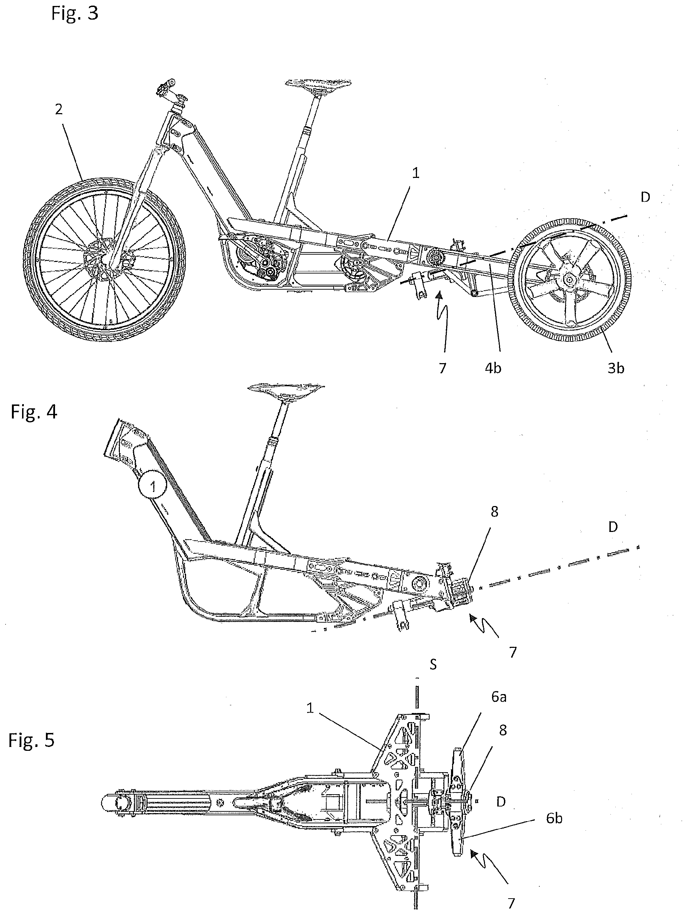

Anhand der Fig. 3 bis 5 wird die Anordnung der Drehstabfederung 7 näher erläutert. Wie noch näher ausgeführt werden wird, umfasst die Drehstabfederung 7 insbesondere eine Drehhülse 8, die am Rahmen 1 um eine Drehhülsenachse D drehbar gelagert ist. Die Drehstabfederung 7 ist dabei zwischen dem Vorderrad 2 und den Hinterrädern 3a, 3b mit einer in Richtung der Hinterräder 3a, 3b aufwärts geneigten Drehhülsenachse D angeordnet. Auf diese Weise wird eine Verlängerung der Schwingen 4a, 4b und somit eine Vergrößerung des Abstandes der Hinterräder 3a, 3b vom Rahmen 1 des Fahrzeugs ermöglicht, um auf diese Weise ausreichend Platz für eine Ladefläche oder dergleichen zu schaffen. Das Fahrzeug kann somit insbesondere als dreirädriges Fahrzeug ausgeführt sein, und eine im Bereich zwischen dem ersten Hinterrad 3a und dem zweiten Hinterrad 3b angeordnete Ladefläche aufweisen. Die Schwingenachse S ist in einem rechten Winkel zur Drehhülsenachse D horizontal verlaufend angeordnet (siehe Fig. 5).

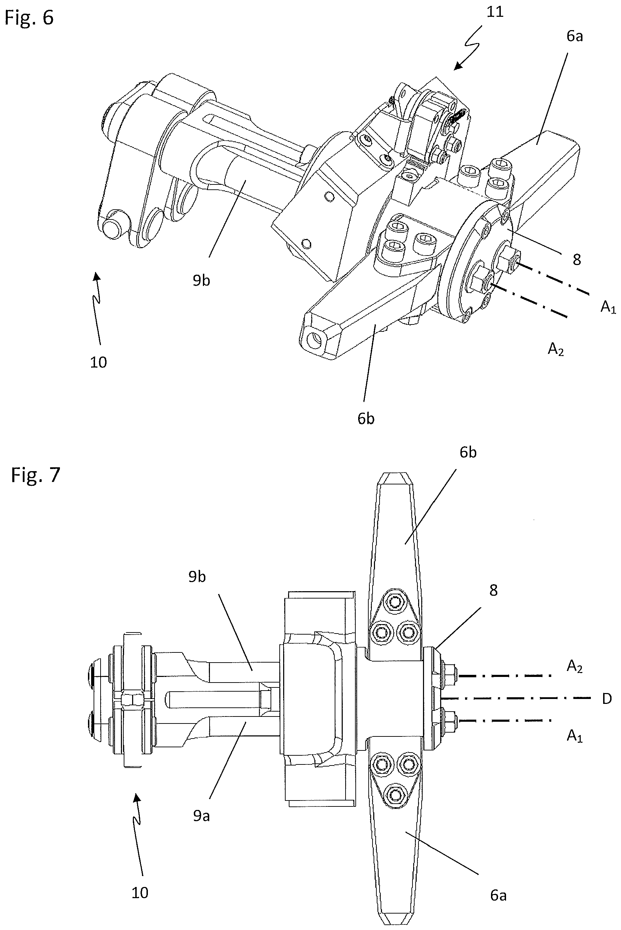

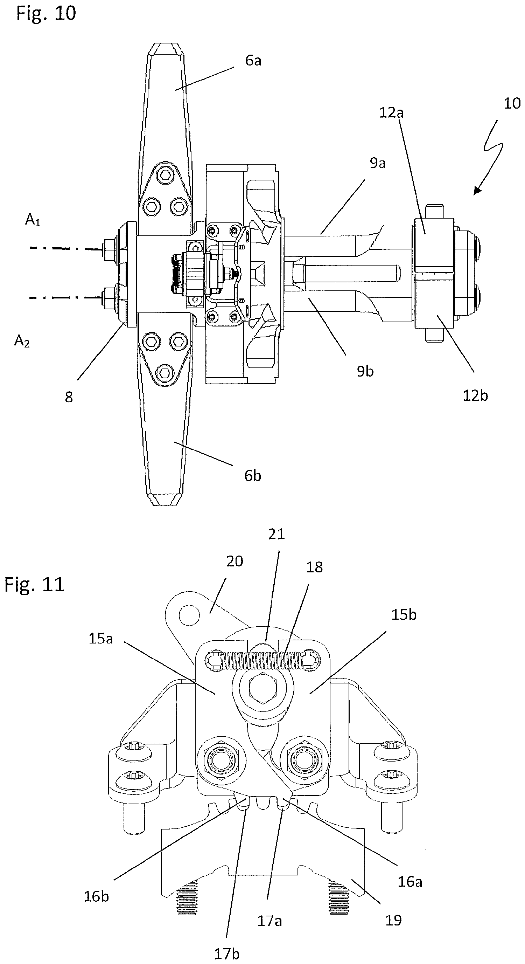

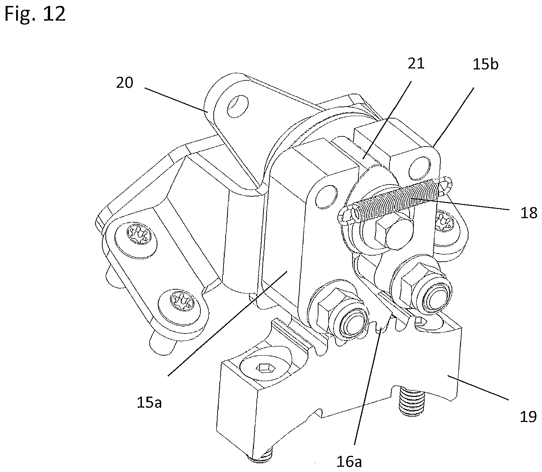

Anhand der Fig. 6 bis 10 wird eine Ausführungsform der Drehstabfederung 7 erläutert. Es sind zunächst die bereits erwähnten Schwingarme 6a, 6b ersichtlich, die über die Aufhängungselemente 5 mit den Schwingen 4 verbunden sind. Auf die Raddrehachsen der Hinterräder 3a, 3b wirkende Kräfte, die geeignet sind eine Veränderung der jeweiligen Höhenlage der Raddrehachsen zu bewirken, werden somit zunächst über die Aufhängungselemente 5 auf den jeweiligen Schwingarm 6a, 6b der Drehstabfederung 7 übertragen. Am ersten Schwingarm 6a ist ein erster Drehstab 9a drehfest befestigt ist, und am zweiten Schwingarm 6b ein zweiter Drehstab 9b. Aufgrund der drehfesten Befestigung kann somit der erste Schwingarm 6a ein Drehmoment auf den ersten Drehstab 9a um die erste Drehstabachse A₁ ausüben. Freilich kann auch der erste Drehstab 9a ein Drehmoment auf den ersten Schwingarm 6a ausüben. In analoger Weise kann aufgrund der drehfesten Befestigung der zweite Schwingarm 6b ein Drehmoment auf den zweiten Drehstab 9b um die zweite Drehstabachse A₂ ausüben, und umgekehrt. Die Drehstäbe 9a, 9b sind aber jeweils an ihren ersten Enden an der Drehhülse 8 befestigt, deren Drehhülsenachse D zwischen den Drehstäben 9a, 9b verläuft und zu den Drehstäben 9a, 9b parallel ist. Die Drehstäbe 9a, 9b sind außerdem an ihren zweiten Enden über einen Drehstabverbinder 10 miteinander verbunden, der in weiterer Folge noch näher erläutert werden wird. Das beispielsweise vom ersten Schwingarm 6a auf den drehfest mit ihm verbundenen ersten Drehstab 9a ausgeübte Drehmoment bewirkt somit eine Torsion des ersten Drehstabes 9a um seine Drehstabachse A₁, die vom Drehstabverbinder 10 in ein Drehmoment um die Drehhülsenachse D umgewandelt wird, das den zweiten Drehstab 9b und somit den zweiten Schwingarm 6b in eine relativ zum ersten Schwingarm 6a gegensinnige Richtung auslenkt. Auf diese Weise wird mithilfe des erfindungsgemäßen Neigemechanismus zwar eine gegensinnige Auslenkung der beiden Schwingarme 6a, 6b sichergestellt, mithilfe der Drehstabfederung 7 aber einerseits eine Federung gewollter oder ungewollter Auslenkbewegungen bewirkt, sowie andererseits eine das Fahrverhalten begünstigende Entkopplung der Neigebewegungen der beiden Hinterräder 3a, 3b. In den Fig. 6 bis 10 ist des Weiteren eine Arretiereinrichtung 11 für die Drehhülse 8 ersichtlich, die anhand der Fig. 11 und 12 noch näher erläutert werden wird.

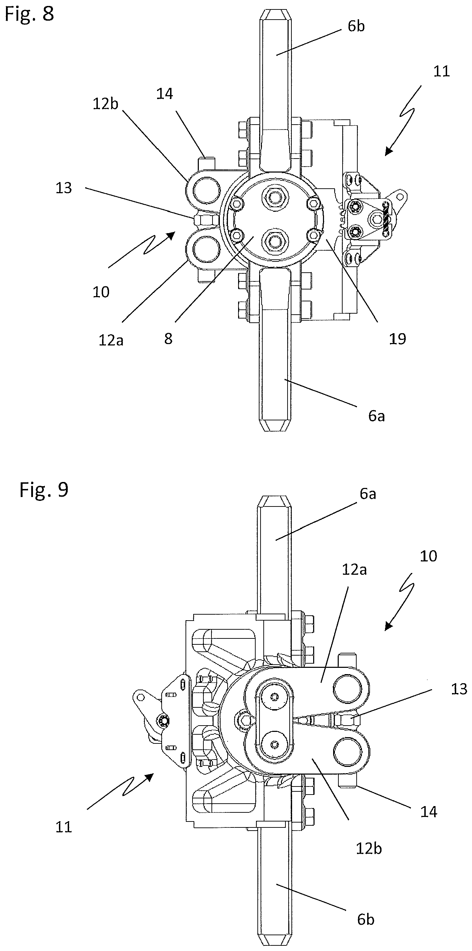

In der Fig. 9 ist der Drehstabverbinder 10 ersichtlich, der in der gezeigten Ausführungsform zwei einarmige Biegehebel 12a, 12b umfasst, die jeweils drehfest mit einem der Drehstäbe 9a, 9b verbunden sind, und an ihren den Drehstäben 9a, 9b abgewandten Hebelenden über ein die Biegevorspannung der Drehstäbe 9a, 9b verstellendes Verstellelement 13 miteinander verbunden sind. Auf diese Weise kann nicht nur das Drehmoment wie oben beschrieben übertragen werden, sondern auch die Steifigkeit der Drehstabfederung 7 eingestellt werden, indem mittels des Verstellelements 13 die Biegevorspannung der Drehstäbe 9a, 9b verstellt wird. Das Verstellelement 13 kann beispielsweise als eine auf einer Gewindestange 14 mit gegensinnigen Gewinden gehaltenen Verstellmutter ausgeführt werden, mit der die den Drehstäben 9a, 9b abgewandten Hebelenden voneinander weg oder aufeinander zu bewegt werden können. Diese Verstellbewegung bewirkt jeweils ein Drehmoment um die Drehstabachse A₁, A₂, die mit der Hebelachse des ihm jeweils zugeordneten Biegehebels 12a, 12b zusammenfällt, das ein Biegemoment auf den jeweiligen Drehstab 9a, 9b ausübt (siehe auch Fig. 10).

Anhand der Fig. 11 und 12 wird die Arretiereinrichtung 11 näher beschrieben. In der gezeigten Ausführungsform umfasst sie zwei am Rahmen 1 schwenkbar angeordnete, zweiarmige Arretierhebel 15a, 15b, die in einer blockierenden Stellung jeweils mit einem an einem ersten Hebelarm angeordneten Arretiervorsprung 16a, 16b in eine ihnen jeweils zugeordnete und an einem Drehhülsenansatz 19 der Drehhülse 8 angeordnete Arretieraufnahme 17a, 17b eingreifen. Die beiden Arretierhebel 15a, 15b sind ferner an ihren jeweils zweiten Hebelarmen über eine Arretierfeder 18 miteinander verbunden und in ihrer blockierenden Stellung gehalten. Des Weiteren ist ein Betätigungshebel 20 vorgesehen, mit dem die beiden Arretierhebel 15a, 15b entgegen der rückstellenden Kraft der Arretierfeder 18 in eine freigebende Stellung bewegbar sind, in der die Arretiervorsprünge 16a, 16b außerhalb der Arretieraufnahmen 17a, 17b liegen. Bei blockierter Drehhülse 8 wird aber auch eine Schwenkbewegung der Schwingarme 6a, 6b unterbunden, sodass die Höhenlage der Raddrehachsen der Hinterräder 3a, 3b nicht mehr verstellbar ist und sich somit auch keine Neigung der Hinterräder 3a, 3b mehr einstellen kann.

Durch Verschwenken des Betätigungshebels 20 wird ein Exzenter mit einer Exzenternase 21 verschwenkt, der zwischen den jeweils zweiten Hebelarmen der Arretierhebel 15a, 15b angeordnet ist. Der Exzenter ist somit mittels des Betätigungshebels 20 zwischen einer ersten Stellung, in der sich die beiden Arretierhebel 15a, 15b in ihrer blockierenden Stellung befinden, in eine zweite Stellung, in der die beiden Arretierhebel 15a, 15b mittels der Exzenternase 21 in ihrer freigebenden Stellung gehalten sind, rotierbar. Der Betätigungshebel 20 selber kann vom Fahrer auch während der Fahrt beispielsweise mittels eines nicht dargestellten Drahtseilzuges betätigt werden, um zwischen dem Fahrmodus mit neigbaren Hinterrädern und dem Fahrmodus mit nicht-neigbaren Hinterrädern zu wechseln.

## Patentansprüche

1. Fahrzeug mit einem Rahmen (1), einem ersten Hinterrad (3a), einem zweiten Hinterrad (3b) sowie einem am Rahmen (1) drehbar gelagerten Vorderrad (2), wobei ein Neigemechanismus zur veränderbaren Neigung der Raddrehachsen des ersten Hinterrades (3a) und des zweiten Hinterrades (3b) zu einer Ebene, die durch die Radaufstandspunkte der Räder (2, 3) aufgespannt wird, vorgesehen ist, der eine erste, am Rahmen (1) angelenkte Schwinge (4a), an der das erste Hinterrad (3a) drehbar befestigt ist und mit der die Höhenlage der Raddrehachse des ersten Hinterrades (3a) veränderbar ist, sowie eine zweite, am Rahmen (1) angelenkte Schwinge (4b), an der das zweite Hinterrad (3b) drehbar befestigt ist und mit der die Höhenlage der Raddrehachse des zweiten Hinterrades (3b) veränderbar ist, umfasst, **dadurch gekennzeichnet, dass** die erste Schwinge (4a) mit der zweiten Schwinge (4b) über eine Drehstabfederung (7) verbunden ist, die zwei parallel zueinander angeordnete Drehstäbe (9a, 9b) umfasst, deren erste Enden an einer Drehhülse (8) befestigt sind, die am Rahmen (1) mit einer zwischen den Drehstäben (9a, 9b) verlaufenden und zu den Drehstäben (9a, 9b) parallelen Drehhülsenachse (D) drehbar gelagert ist, und deren zweite Enden über einen Drehstabverbinder (10) miteinander verbunden sind, wobei an einem ersten Drehstab (9a) ein erster Schwingarm (6a) drehfest befestigt ist, der über erste Aufhängungselemente (5a) mit der ersten Schwinge (4a) verbunden ist, und an einem zweiten Drehstab (9b) ein zweiter Schwingarm (6b) drehfest befestigt ist, der über zweite Aufhängungselemente (5b) mit der zweiten Schwinge (4b) verbunden ist.

2. Fahrzeug nach Anspruch 1, **dadurch gekennzeichnet, dass** die Drehstabfederung (7) zwischen dem Vorderrad (2) und den Hinterrädern (3a, 3b) angeordnet ist.

3. Fahrzeug nach Anspruch 1 oder 2, **dadurch gekennzeichnet, dass** die erste Schwinge (4a) und die zweite Schwinge (4b) um eine gemeinsame, horizontale Schwingenachse (S) am Rahmen (1) schwenkbar gelagert sind.

4. Fahrzeug nach einem der Ansprüche 1 bis 3, **dadurch gekennzeichnet, dass** die ersten Aufhängungselemente (5a) und die zweiten Aufhängungselemente (5b) jeweils aus starren Verbindungsstäben gebildet werden.

5. Fahrzeug nach einem der Ansprüche 1 bis 4, **dadurch gekennzeichnet, dass** die Drehstabfederung (7) mit einer die Drehbewegung der Drehhülse (8) relativ zum Rahmen (1) wahlweise blockierenden Arretiereinrichtung (11) versehen ist.

6. Fahrzeug nach Anspruch 5, **dadurch gekennzeichnet, dass** die Arretiereinrichtung (11) zwei am Rahmen (1) schwenkbar angeordnete, zweiarmige Arretierhebel (15a, 15b) umfasst, die in einer blockierenden Stellung jeweils mit einem an einem ersten Hebelarm angeordneten Arretiervorsprung (16a, 16b) in eine ihnen jeweils zugeordnete und an der Drehhülse (8) angeordnete Arretieraufnahme (17a, 17b) eingreifen, und die beiden Arretierhebel (15a, 15b) an ihren jeweils zweiten Hebelarmen über eine Arretierfeder (18) miteinander verbunden und in ihrer blockierenden Stellung gehalten sind, wobei ein Betätigungshebel (20) vorgesehen ist, mit dem die beiden Arretierhebel (15a, 15b) entgegen der rückstellenden Kraft der Arretierfeder (18) in eine freigebende Stellung bewegbar sind, in der die Arretiervorsprünge (16a, 16b) außerhalb der Arretieraufnahmen (17a, 17b) liegen.

7. Fahrzeug nach Anspruch 6, **dadurch gekennzeichnet, dass** zwischen den jeweils zweiten Hebelarmen der Arretierhebel (15a, 15b) ein Exzenter mit einer Exzenternase (21) angeordnet ist, der mittels des Betätigungshebels (20) zwischen einer ersten Stellung, in der sich die beiden Arretierhebel (15a, 15b) in ihrer blockierenden Stellung befinden, in eine zweite Stellung, in der die beiden Arretierhebel (15a, 15b) mittels der Exzenternase (21) in ihrer freigebenden Stellung gehalten sind, rotierbar ist.

8. Fahrzeug nach einem der Ansprüche 1 bis 7, **dadurch gekennzeichnet, dass** der Drehstabverbinder (10) zwei einarmige Biegehebel (12a, 12b) umfasst, die jeweils drehfest mit einem der Drehstäbe (9a, 9b) verbunden sind, und an ihren den Drehstäben (9a, 9b) abgewandten Hebelenden über ein die Biegevorspannung der Drehstäbe (9a, 9b) verstellendes Verstellelement (13) miteinander verbunden sind.

9. Fahrzeug nach einem der Ansprüche 1 bis 8, **dadurch gekennzeichnet, dass** es als dreirädriges Fahrrad ausgeführt ist.

10. Fahrzeug nach einem der Ansprüche 1 bis 9, **dadurch gekennzeichnet, dass** es eine im Bereich zwischen dem ersten Hinterrad und dem zweiten Hinterrad angeordnete Ladefläche aufweist.

## Claims

1. Vehicle having a frame (1), a first rear wheel (3a), a second rear wheel (3b) and a front wheel (2) rotatably mounted on the frame (1), wherein an inclining mechanism is provided for variable inclination of the wheel rotation axes of the first rear wheel (3a) and of the second rear wheel (3b) relative to a plane defined by the wheel contact points of the wheels (2, 3), which inclining mechanism comprises a first rocker (4a), which is articulated on the frame (1), to which the first rear wheel (3a) is rotatably fastened and by means of which the vertical position of the wheel rotation axis of the first rear wheel (3a) can be varied, and a second rocker (4b), which is articulated on the frame (1), to which the second rear wheel (3b) is rotatably fastened and by means of which the vertical position of the wheel rotation axis of the second rear wheel (3b) can be varied, **characterized in that** the first rocker (4a) is connected to the second rocker (4b) via a torsion bar spring suspension (7) which comprises two torsion bars (9a, 9b) which are arranged parallel to one another and whose first ends are fastened to a torsion sleeve (8) which is mounted rotatably on the frame (1) with a torsion sleeve axis (D) extending between the torsion bars (9a, 9b) and parallel to the torsion bars (9a, 9b), and the second ends of which are connected to one another via a torsion bar connector (10), wherein a first rocker arm (6a) is fastened in a rotationally fixed manner to a first torsion bar (9a) and is connected to the first rocker (4a) via first suspension elements (5a), and a second rocker arm (6b) is fastened in a rotationally fixed manner to a second torsion bar (9b) and is connected to the second rocker arm (4b) via second suspension elements (5b).

2. Vehicle according to claim 1, **characterized in that** the torsion bar spring suspension (7) is arranged between the front wheel (2) and the rear wheels (3a, 3b).

3. Vehicle according to claim 1 or 2, **characterized in that** the first rocker (4a) and the second rocker (4b) are pivotably mounted on the frame (1) about a common, horizontal rocker axis (S).

4. Vehicle according to one of claims 1 to 3, **characterized in that** the first suspension elements (5a) and the second suspension elements (5b) are each formed from rigid connecting rods.

5. Vehicle according to one of claims 1 to 4, **characterized in that** the torsion bar spring suspension (7) is provided with a locking device (11) selectively blocking the rotational movement of the torsion sleeve (8) relative to the frame (1).

6. Vehicle according to claim 5, **characterized in that** the locking device (11) comprises two two-armed locking levers (15a, 15b) which are arranged pivotably on the frame (1) and which, in a locking position, each engage by means of a locking projection (16a, 16b) arranged on a first lever arm in a locking receptacle (17a, 17b) assigned to them in each case and arranged on the torsion sleeve (8), and the two locking levers (15a, 15b) are connected to one another at their respective second lever arms via a locking spring (18) and are held in their locking position, wherein an actuating lever (20) is provided by means of which the two locking levers (15a, 15b) can be moved counter to the restoring force of the locking spring (18) into a releasing position in which the locking projections (16a, 16b) lie outside the locking receptacles (17a, 17b).

7. Vehicle according to claim 6, **characterized in that** an eccentric having an eccentric nose (21) is arranged between the respective second lever arms of the locking levers (15a, 15b), which eccentric can be rotated by means of the actuating lever (20) between a first position, in which the two locking levers (15a, 15b) are in their locking position, and a second position, in which the two locking levers (15a, 15b) are held in their releasing position by means of the eccentric nose (21).

8. Vehicle according to one of claims 1 to 7, **characterized in that** the torsion bar connector (10) comprises two single-armed bending levers (12a, 12b), which are each connected in a rotationally fixed manner to one of the torsion bars (9a, 9b) and are connected to one another at their lever ends facing away from the torsion bars (9a, 9b) via an adjusting element (13) which adjusts the bending pretension of the torsion bars (9a, 9b).

9. Vehicle according to one of claims 1 to 8, **characterized in that** it is designed as a three-wheeled bicycle.

10. Vehicle according to one of claims 1 to 9, **characterized in that** it has a loading surface arranged in the region between the first rear wheel and the second rear wheel.

## Revendications

1. Véhicule ayant un châssis (1), une première roue arrière (3a), une deuxième roue arrière (3b) ainsi qu'une roue avant (2) montée de manière à pouvoir tourner sur le châssis (1), un mécanisme d'inclinaison étant prévu, permettant d'incliner de manière variable les axes de rotation de la première roue arrière (3a) et de la deuxième roue arrière (3b) par rapport à un plan qui est défini par les points d'appui des roues (2, 3), qui comprend un premier bras oscillant (4a) articulé sur le châssis (1), sur lequel la première roue arrière (3a) est fixée de manière à pouvoir tourner et avec lequel la position en hauteur de l'axe de rotation de la première roue arrière (3a) peut être modifiée, ainsi qu'un deuxième bras oscillant (4b) articulé sur le châssis (1), sur lequel la deuxième roue arrière (3b) est fixée de manière à pouvoir tourner et avec lequel la position en hauteur de l'axe de rotation de la deuxième roue arrière (3b) peut être modifiée, **caractérisé en ce que** le premier bras oscillant (4a) est relié au deuxième bras oscillant (4b) par une suspension à barres de torsion (7) qui comprend deux barres de torsion (9a, 9b) disposées parallèlement l'une à l'autre, dont les premières extrémités sont fixées à un manchon rotatif (8) qui est logé de manière à pouvoir tourner sur le châssis (1) avec un axe de manchon rotatif (D) s'étendant entre les barres de torsion (9a, 9b) et parallèle aux barres de torsion (9a, 9b), et dont les deuxièmes extrémités sont reliées l'une à l'autre par un connecteur de barres de torsion (10), un premier bras oscillant (6a) étant fixé de manière à ne pas tourner à une première barre de torsion (9a) et relié au premier bras oscillant (4a) par des premiers éléments de suspension (5a), et un deuxième bras oscillant (6b) étant fixé de manière à ne pas tourner à une deuxième barre de torsion (9b) et relié au deuxième bras oscillant (4b) par des deuxièmes éléments de suspension (5b).

2. Véhicule selon la revendication 1, **caractérisé en ce que** la suspension à barres de torsion (7) est disposée entre la roue avant (2) et les roues arrière (3a, 3b).

3. Véhicule selon la revendication 1 ou 2, **caractérisé en ce que** le premier bras oscillant (4a) et le deuxième bras oscillant (4b) sont montés sur le châssis (1) de manière à pouvoir pivoter autour d'un axe de bras oscillant (S) commun et horizontal.

4. Véhicule selon l'une quelconque des revendications 1 à 3, **caractérisé en ce que** les premiers éléments de suspension (5a) et les deuxièmes éléments de suspension (5b) sont formés respectivement de barres de liaison rigides.

5. Véhicule selon l'une quelconque des revendications 1 à 4, **caractérisé en ce que** la suspension à barres de torsion (7) est munie d'un dispositif d'arrêt (11) bloquant sélectivement le mouvement de rotation du manchon rotatif (8) par rapport au châssis (1).

6. Véhicule selon la revendication 5, **caractérisé en ce que** le dispositif d'arrêt (11) comprend deux leviers d'arrêt (15a, 15b) à deux bras, disposés de manière à pouvoir pivoter sur le châssis (1), qui, dans une position de blocage, s'engagent chacun avec une saillie d'arrêt (16a, 16b) disposée sur un premier bras de levier dans un logement d'arrêt (17a, 17b) qui leur est respectivement associé et qui est disposé sur le manchon rotatif (8), et les deux leviers d'arrêt (15a, 15b) sont reliés l'un à l'autre au niveau de leurs deuxièmes bras de levier respectifs par l'intermédiaire d'un ressort d'arrêt (18) et sont maintenus dans leur position de blocage, un levier d'actionnement (20) étant prévu, avec lequel les deux leviers d'arrêt (15a, 15b) peuvent être déplacés à l'opposé de la force de rappel du ressort d'arrêt (18) dans une position de libération, dans laquelle les saillies d'arrêt (16a, 16b) se trouvent à l'extérieur des logements d'arrêt (17a, 17b).

7. Véhicule selon la revendication 6, **caractérisé en ce qu'**entre les deuxièmes bras de levier respectifs des leviers d'arrêt (15a, 15b) est disposé un excentrique avec un nez d'excentrique (21), qui peut être mis en rotation au moyen du levier d'actionnement (20) entre une première position, dans laquelle les deux leviers d'arrêt (15a, 15b) se trouvent dans leur position de blocage, dans une deuxième position, dans laquelle les deux leviers d'arrêt (15a, 15b) sont maintenus dans leur position de libération au moyen du nez d'excentrique (21).

8. Véhicule selon l'une quelconque des revendications 1 à 7, **caractérisé en ce que** le connecteur de barres de torsion (10) comprend deux leviers de flexion (12a, 12b) à un bras, qui sont reliés chacun de manière à ne pas tourner à l'une des barres de torsion (9a, 9b), et sont reliés entre eux à leurs extrémités de levier opposées aux barres de torsion (9a, 9b) par l'intermédiaire d'un élément de réglage (13) réglant la précontrainte de flexion des barres de torsion (9a, 9b).

9. Véhicule selon l'une quelconque des revendications 1 à 8, **caractérisé en ce qu'**il est réalisé sous la forme d'un vélo à trois roues.

10. Véhicule selon l'une quelconque des revendications 1 à 9, **caractérisé en ce qu'**il présente une surface de chargement disposée dans la zone située entre la première roue arrière et la deuxième roue arrière.
